# EUROPEAN PATENT SPECIFICATION

(11) **EP 0 548 892 B1**
(45) Date of publication and mention of the grant of the patent: **10.06.1998**
(21) Application number: 92121731.1
(22) Date of filing: 21.12.1992
(51) Int. Cl.: H04N 5/335

(54) **Electronic camera having improved S/N ratio in still video mode**
Elektronische Kamera mit verbessertem Rauschabstand im Einzelbildbetrieb
Caméra électronique ayant un rapport signal/bruit amélioré en mode images fixes

(30) Priority: 20.12.1991 US 811593
(43) Date of publication of application: 30.06.1993
(73) Proprietor: EASTMAN KODAK COMPANY, Rochester, New York 14650-2201 (US)
(72) Inventor: Bell, Cynthia S., c/o Eastman Kodak Company, Rochester, New York 14650-2201 (US)
(74) Representative: Wagner, Karl H., Dipl.-Ing.

(56) References cited:
- EP-A- 0 103 023
- US-A- 4 599 657
- PATENT ABSTRACTS OF JAPAN vol. 13, no. 232 (E-765)29 May 1989 & JP-A-01 039 178

## Description

### Technical Field

This invention relates to an electronic image capture apparatus and method operable in a still video image capture mode employing a solid state image sensor, and more particularly, is directed to an improved solid state image sensor of the interline transfer type and a shutter means for producing an image output signal representing a still video image.

### Technical Background

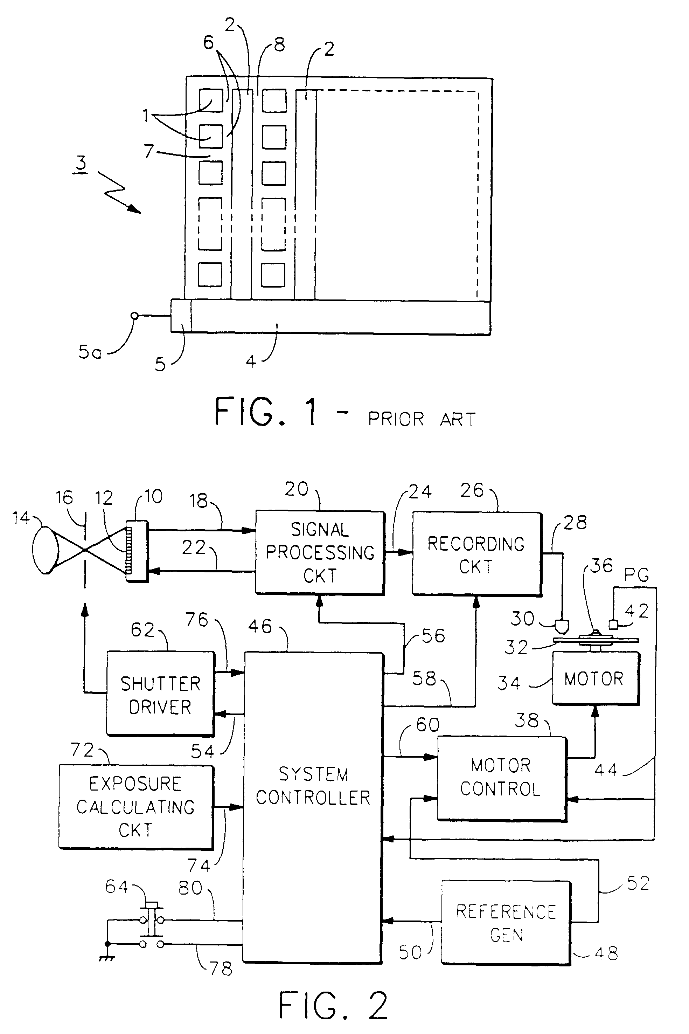

Solid state image pickup devices comprising a charge transfer device such as a charge coupled device (hereinafter referred to as a CCD) are classified broadly into the frame transfer type and the interline transfer type. An example of a solid state image pickup device of the interline transfer type using a CCD is constituted as shown in Figure 1, and comprises a photosensing and vertical transfer portion 3 which includes a plurality of photodetectors 1 arranged in horizontal and vertical rows and vertical transfer portions 2 each formed with a group of CCDs and provided along each of the vertical rows of the photodetectors 1. A horizontal transfer portion 4 is coupled with the photosensing and vertical transfer portion 3 and an output portion 5 is coupled with the horizontal transfer portion 4 and provided with a signal output terminal 5a. The foregoing portions are formed on a common semiconductor substrate.

The photo-sensing and vertical transfer portion 3 mentioned above contains transfer gate areas 6 provided between each vertical row of the photodetectors 1 and the corresponding one of the vertical transfer portions 2; a channel stop area 7; and an overflow control gate portion and drain 8 provided around each of the photodetectors 1.

In a solid state image capture apparatus employing such a solid state image sensor as mentioned above, a predetermined vertical transfer driving signal and a predetermined horizontal transfer driving signal are applied to the vertical transfer portions 2 and the horizontal transfer portion 4, respectively, so that vertical and horizontal charge transfers are performed in the solid state image sensor. With such driving signals, signal charge obtained in the photodetectors 1 in response to the light received thereby during for example, one exposure period, is read out to the vertical transfer portions 2 and then transferred vertically toward the horizontal transfer portion 4 by the charge transfer operation of the vertical transfer portions 2 no that the signal charge produced in each horizontal row of the photodetectors 1 is transferred in turn to the horizontal transfer portion 4. The signal charge transferred to the horizontal transfer portion 4 is further transferred horizontally to the output portion 5 by the charge transfer operation of the horizontal transfer portion 4 during each horizontal video period and as a result of this an image capture signal output is obtained at the signal output terminal 5a.

I have found that if an image capture apparatus is desired for use as a motion and still video camera, and the apparatus includes an interline transfer-type image sensor, then the signal to noise ratio (S/N) of the images captured in motion video mode will be less than the S/N ratio desired for still video mode. In conventional practice, the interline imager is designed for use in capturing motion video and thus its S/N ratio is generally acceptable. However, such a S/N ratio would perceptibly degrade the image quality of a still video image.

The lesser S/N ratio in an interline imager when operated in still video mode is due to a charge migration phenomena that occurs from the photodetectors. During the time the photodetectors 1 are exposed to a light image, they do not capture all of the incident photons; statistically, some photons are converted to electrons at locations deep in the silicon composition that forms the photodetector. Those deeper electrons drift and some are captured by the adjacent vertical transfer portion 3.

During this charge migration, the vertical transfer portion is concurrently used to transfer an image signal packet from elsewhere in the image sensor. The signal packet is contaminated by the drifting electrons from any adjacent photodetectors, and its image S/N ratio is undesireably reduced.

EP-A-0 103 023 relates in detail to solid state image pickup apparatus employing a solid state image pickup device which comprises a charge transfer device, and more particularly, is directed to a solid state image pickup apparatus employing a solid state image pickup device of the interline transfer type and a shutter mechanism provided to the solid state image pickup device for producing an image pickup signal output representing a still image, in which the light-receiving aperture ratio is substantially increased so that the photo-sensitivity is improved.

Solid state image pickup devices comprising a charge transfer device such as a charge coupled device (hereinafter referred to as a CCD) are classified broadly into the frame transfer type and the interline transfer type. An example of a solid state image pickup device of the interline transfer type using a CCD comprises a photo-sensing and vertical transfer portion which includes a plurality of photodetectors arranged in horizontal and vertical rows and vertical transfer portions each formed with a group of CCD's and provided along each of the vertical rows of the photodetectors, a horizontal transfer portion coupled with a photo-sensing and vertical transfer portion and an output portion coupled with the horizontal transfer portion and provided with a signal output terminal, all of which is formed on a common semiconductor substrate. In a solid state image pickup apparatus employing such a solid state image pickup device as mentioned above, a predetermined vertical transfer driving signal and a predetermined horizontal transfer driving signal are applied to the vertical transfer portions and the horizontal transfer portions, respectively, so that vertical and horizontal charge transfers are performed in the solid state image pickup device. With such driving signals, signal charge obtained in the photodetectors in response to the light received thereby during, for example, one frame period is read out to the vertical transfer portions and then transferred vertically toward the horizontal transfer portion by the charge transfer operation of the vertical transfer portions during each horizontal blanking period so that the signal charge produced in each horizontal row of the photodetectors is transferred in turn to the horizontal transfer portion. The signal charge transferred to the horizontal transfer portion is further transferred horizontally to the output portion by the charge transfer operation of the horizontal transfer portion during each horizontal video period, and as a result of this an image pickup signal output is obtained at the signal output terminal. The photo-sensing and vertical transfer portion mentioned above contains transfer gate areas provided between each vertical row of the photodetectors and the corresponding one of the vertical transfer portions, and a channel stop area and an overflow control gate portion provided around each of the photodetectors.

### Summary of the Invention

To improve the S/N for still picture capture, a motion and still video image capture apparatus (hereinafter, a camera) operates in a still video mode wherein an optical shutter means is used as a protective cover following an electronically-determined exposure period (electronic shuttering) so as to prevent light from impinging on the image sensor during image data readout. A synchronization scheme for the electronic and optical shuttering is contemplated wherein the electronic shuttering serves to define the image capture period (exposure duration) and the optical shuttering need be sychronized merely to afford a protective cover for effecting the improved S/N ratio in the still video mode.

The embodiment of the invention concerning an electronic image capture apparatus operable in a still image capture mode and a method for image capture in a still image capture mode is set out in claims 1 and 9.

### Brief Description of the Drawings

The object and features of the present invention will become more apparent from consideration of the following detailed description taken in conjunction with the accompanying drawings, in which:
Figure 1 is an illustration of a conventional interline-transfer image sensor;
Figure 2 is a schematic block diagram showing the circuit configuration of an embodiment of an electronic motion and still video image capture apparatus (camera) constructed according to the present invention; and
Figure 3 is a timing diagram describing signal conditions during the operation of the camera shown in Figure 2.

### Description of the Preferred Embodiment

Because video cameras, and especially video cameras employing interline-transfer image sensors, are well known, the present description will be directed in particular to elements forming part of, or cooperating more directly with, apparatus in accordance with the present invention. Elements not specifically shown or described herein may be selected from those known in the art.

An embodiment of a motion and still video camera in accordance with the present invention will be described in detail with reference to the accompanying drawings. In Figure 2, there is shown an embodiment of the present invention in which an imaging lens optical system 14 and an optical shutter 16 are disposed before an array of photosensitive cells (photodetectors) of a solid-state imaging device 10 basically comprising a interline transfer type charge-coupled device. The optical shutter 16 preferably includes a conventional mechanical (blade) exposing mechanism which is driven to be opened and closed in response to a shutter driver 62.

The solid-state imaging device 10 has a video output 18 connected to a signal processing circuit 20, which drives the array of photosensitive coils 12 of the solid-state imaging device 10 via a control line 22 to receive a video signal representative of an image formed on the cell array, thereby forming a video signal of a predetermined format from the video signal delivered from the output terminal 18. The processing circuit 20 has an output 24 connected to a recording circuit 26, which conducts a frequency modulation on a video signal from the signal processing circuit 20 to produce the resultant signal from a modulated video signal output 28 connected to a magneto-optic recording head 30.

The magneto-optic recording head 30 is moved to be positioned over a desired track of a magneto-optic disk 32 by a head moving mechanism, not shown, and comprises an electro-optic transducing device for recording a video signal. The magneto-optic disk 32 is detachably fixed on a rotation shaft 36 to be driven by a motor 34 and rotates in a predetermined direction under the control of the motor 34 and a control circuit 38 therefor.

The overall operation of the camera is controlled by the system controller 46. A connecting line 50 of the system controller 46 and a connecting line 52 of the motor control 38 are supplied with a reference signal having a stable, predetermined frequency from a reference signal generator 48. The system controller 46 generates on the basis of the reference signal various synchronizing signals that are in turn used to control the shutter drive 62, the signal processing circuit 20, the recording circuit 26, and the motor control 38 in time with these signals as indicated by control lines 54, 56, 58, and 60, thereby recording in response to an operation of a shutter release button 64 a unit of picture video signals on a track of the magneto-optic disk 32.

Circuit 72 will be understood to function in a still video mode or a motion video mode according to selections made by the camera operator. It should therefore be appreciated that although the camera may be operated in a motion video mode, the present invention is directed to design and mode of operation in the camera for combining motion with improved still video image capture.

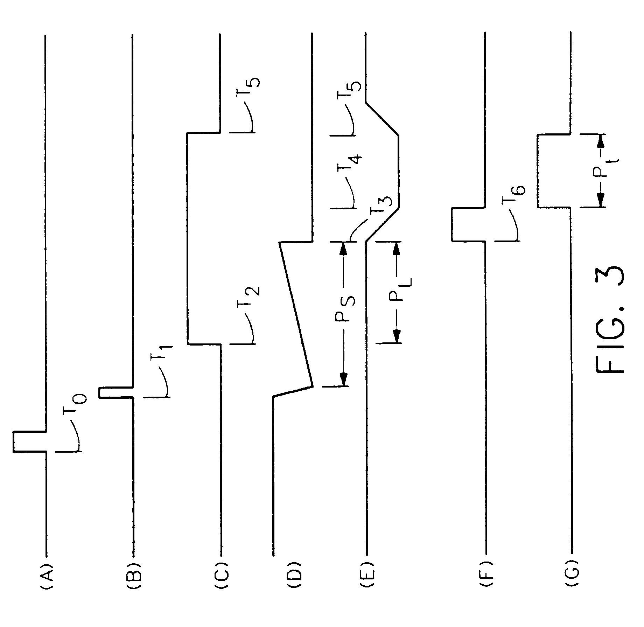

With reference now to Figure 3, a still video exposure seqence according to the present invention will be understood. Figure 3(a) indicates activation of the shutter release switch 64; Figure 3(b) indicates the clearing of the photodetectors 1; Figure 3(c) indicates the power provided by the shutter driver 62; Figure 3(d) indicates the charge level of the photodetector 1; Figure 3(e) indicates the condition of the optical shutter blade; Figure 3(f) and 3(g) indicate the operation or the transfer gate areas 6 and the vertical transfer portions 2.

When the camera shutter release switch 64 is actuated at time T₀, a scene exposure reading is made with a light meter circuit (not shown). The camera controller uses the light level reading to select the appropriate aperture and exposure speed is then determined according to known techniques, to predetermine the requisite electronically-controlled exposure. The calculated exposure duration value is output on line 74 connected to the system controller 46.

The controller also determines the time T₁ of the electronic clearing of the photodetector and the time T₂ for powering the optical shutter release, by considering the optical shutter lag time P_{L} with respect to the the desired integration time Pₛ. The controller thus directs the clearing of the image sensor so as to initiate the exposure period Pₛ. Once the clearing is completed, the image integration begins (i.e, the onset of electronic shuttering).

The desired exposure time T₁ and exposure period Pₛ is set according to calculations by the exposure time calculating circuit 72. During the shutter lag period P_{L}, integration continues until the integration is arrested by activation of the transfer gate areas 6 at time T₆. Thus, the time T₃ (when the optical shutter blade is expected to begin occlusion of the photodetector) is predicted such that the integration is halted by transferring the image charges to the light shielded transfer gate areas 6. As the blades finish covering the photodetector (the period between T₃ and T₄), any charge wandering into adjacent transfer gate areas 6 and/or into the vertical transfer portion 3 will be spatially correct and thus the image S/N will not be degraded.

When the controller 46 initiates vertical transfer (during period Pₜ) of the image data from the vertical transfer portion 3, the blades are in the closed position. Following charge readout and vertical transfer, the blades are released at time T₅, whereupon the image transfer in complete. Preparations for another still video image capture, or for initiating a motion video mode, may proceed.

While there has been shown what are considered to be the preferred embodiments of the invention, it will be manifest that changes and modifications may be made without departing from the essential spirit of the invention. It is intended, therefore, in the annexed claims, to cover all such changes and modifications as may fall within the scope of the invention. For example, whereas the optical shutter mechanism has been described with respect to mechanical (blade-type) means, other mechanical shutter designs, as well as electro-optical light-occluding means such as an a semiconductor light valve assembly, or other non-mechanical devices, are contemplated within alternative embodiments.

### Applicability for Industrial Use

As described above, the solid state image capture apparatus according to the present invention can produce an image capture signal output representing a still image with superior signal to noise ratio, and therefore it is quite suitable for use in a high-grade motion and still video camera.

## Claims

1. An electronic image capture apparatus operable in a still video image capture mode, comprising:
a solid state image sensor (10) of the interline transfer type which has a photodetector (1) for producing a signal charge in response to light received thereon, charge transfer means including a light shielded transfer gate area (6) formed adjacent said photodetector (1) for reading out the signal charge in the photodetector (1), and transfer portion (2) formed adjacent said transfer gate are a (6) for transferring the signal charge read out from the photodetector (1), characterized by :
optical shutter means (16) provided with respect to the solid state image sensor (10) such that when the optical shutter means (16) is open the photodetector (1) is exposed to incident light and when the optical shutter means (16) is closed the photodetector (1) is shielded from incident light, said shutter means (16) having a shutter lagtime measured between first powering the shutter means (16) and closure of the shutter means (16);
system controller means (46) for effecting electronic control of an exposure period, including:
(a) means for electronically clearing the photodetector (1) to initiate the exposure period and begin integration of the signal charge, and
(b) means for subsequent electronic activation of the transfer gate area (6) to end the exposure period and to initiate a reading out period wherein the signal charge is transferred from the photodetector (1) to the transfer gate area (6); and
means for effecting closure of the optical shutter means (16) such that the shutter means (16) is first powered before the electronic activation of the transfer gate area (6) and then achieves closure contemporaneously with electronic activation of the transfer gate area (6) so as to produce an image capture output signal according to the image charge transferred from the transfer gate area (6) to the transfer portion (2) whereby the image capture output signal has an improved S/N ratio.

2. The image capture apparatus of claim 1, wherein the photodetector (1) is formed as a CCD photodiode.

3. The image capture apparatus of claim 1, wherein the transfer portion (2) comprises a vertical charge transfer register.

4. The image capture apparatus of claim 3, further comprising a horizontal transfer register (4) and means for transferring the image capture signal from the vertical transfer register to the horizontal transfer register (4).

5. The image capture apparatus of claim 4, further comprising means for receiving the image capture signal from the horizontal register (4) and means (30) for recording the received signal on a signal recording medium (32).

6. The image capture apparatus of claim 1, further comprising channel stop means and charge overflow means located adjacent the photodetector (1).

7. The image capture apparatus of claim 1, further comprising means for selecting the still image capture mode of operation.

8. The image capture apparatus of claim 1, wherein the optical shutter (16) means comprises a mechanical blade shutter and means for effecting opening and closure of the blade shutter.

9. A method for image capture in a still video image capture mode, comprising the steps of:
providing a solid state image sensor (10) of the interline transfer type which has a photodetector (1) for producing a signal charge in response to light received thereon, charge transfer means including a light shielded transfer gate area (6) formed adjacent said photodetector (1) for reading out the signal charge in the photodetector (1), and a transfer portion (2) formed adjacent said transfer gate area (6) for transferring the signal charge readout from the photodetector (1), characterized by the following steps:
providing an optical shutter means (16) with respect to the solid state image sensor (10) such that when the optical shutter means (16) is open the photodetector (1) is exposed to incident light and when the optical shutter means (16) is closed, the photodetector (1) is shielded from incident light, said shutter means (16) having a shutter lagtime measured between first powering the shutter means (16) and closure of the shutter means (16);
effecting electronic control of an exposure period, including the steps of:
(a) electronic clearing of the photodetector (1) to initiate the exposure period and begin integration of the signal charge, and
(b) subsequent electronic activation of the transfer gate area to end the exposure period and to initiate a reading out period wherein the signal charge is transferred from the photodetector (1) to the transfer gate area (6); and
closing the optical shutter means (16) such that the shutter means (16) is first powered before the electronic activation of the transfer gate area (6) and then achieves closure contemporaneously with electronic activation of the transfer gate area (6), so as to produce an image capture output signal according to the image charge transferred from the transfer gate area (6) to the transfer portion (2) whereby the image capture output signal has an improved S/N ratio.

## Patentansprüche

1. Elektronische Bilderfassungsvorrichtung, die in einem Videostandbilderfassungsmodus betrieben werden kann und folgendes aufweist:
einen Festkörper-Bildsensor (10) vom Interline-Übertragungstyp, welcher einen Photodetektor (1) zum Erzeugen einer Signal ladung ansprechend auf darauf empfangenes Licht erzeugt, Ladungsübertragungsmittel einschließlich eines lichtabgeschirmten Übertragungsgatterbereichs (6), welcher benachbart zu dem Photodetektor (1) ausgebildet ist, zum Auslesen der Signalladung in dem Photodetektor (1), und einen Übertragungsteil (2) besitzt, welcher benachbart zu dem Übertragungsgatterbereich (6) ausgebildet ist, zum Übertragen der aus dem Photodetektor (1) ausgelesenen Signalladung,
gekennzeichnet durch:
optische Verschlußmittel (16) die bezüglich des Festkörper-Bildsensors (10) derart vorgesehen sind, daß wenn die optischen Verschlußmittel (16) offen sind, der Photodetektor (1) auftreffendem Licht ausgesetzt ist, und wenn die optischen Verschlußmittel (16) geschlossen sind, der Photodetektor (1) bezüglich auftreffendem Licht abgeschirmt ist, wobei die Verschlußmittel (16) eine Verschlußverzögerungszeit besitzen, die zwischen dem ersten Betätigen (bzw. Versorgen mit Leistung) der Verschlußmittel (16) und dem Schließen der Verschlußmittel (16) gemessen wird;
Systemsteuereinheitsmittel (16) zum Bewirken einer elektronischen Steuerung einer Belichtungsperiode, einschließlich:
(a) Mitteln zum elektronischen Leeren bzw. Löschen des Photodetektors (1), um die Belichtungsperiode einzuleiten und mit der Integration der Signal ladung zu beginnen, und
(b) Mitteln zur nachfolgenden elektronischen Aktivierung des Übertragungsgatterbereichs (6), um die Belichtungsperiode zu beenden und eine Ausleseperiode einzuleiten, in der die Signalladung von dem Photodetektor (1) zu dem Übertragungsgatterbereich (6) übertragen wird; und
Mitteln zum Bewirken des Schließens der optischen Verschlußmittel (16), so daß die Verschlußmittel (16) zuerst vor der elektronischen Aktivierung des Übertragungsgatterbereichs (6) betätigt bzw. mit Leistung versorgt werden und dann ein gleichzeitiges Schließen mit der elektronischen Aktivierung des Übertragungsgatterbereichs (6) erreicht wird, um ein Bilderfassungsausgabesignal entsprechend der von dem Übertragungsgatterbereich (6) an den Übertragungsteil (2) übertragenen Bildladung bzw. -charge zu erzeugen, wodurch das Bilderfassungsausgabesignal einen verbesserten Rauschabstand besitzt.

2. Bilderfassungsvorrichtung gemäß Anspruch 1, wobei der Photodetektor (1) als eine CCD-Photodiode ausgebildet ist.

3. Bilderfassungsvorrichtung gemäß Anspruch 1, wobei der Übertragungsteil (2) ein Vertikal-Ladungsübertragungsregister aufweist.

4. Bilderfassungsvorrichtung gemäß Anspruch 3, wobei die Vorrichtung ferner ein Horizontal-Übertragungsregister (4) und Mittel zum Übertragen des Bilderfassungssignals von dem Vertikal-Übertragungsregister zu dem Horizontal-Übertragungsregister (4) aufweist.

5. Bilderfassungsvorrichtung gemäß Anspruch 4, wobei die Vorrichtung ferner Mittel zum Empfangen des Bilderfassungssignals von dem Horizontal-Register (4) sowie Mittel (30) zum Aufzeichnen des empfangenen Signals auf ein Signalaufzeichnungsmedium (32) aufweist.

6. Bilderfassungsvorrichtung gemäß Anspruch 1, wobei die Vorrichtung ferner Kanal-Stopp-Mittel und Ladungsüberlaufmittel benachbart zu dem Photodetektor (1) aufweist.

7. Bilderfassungsvorrichtung gemäß Anspruch 1, wobei die Vorrichtung ferner Mittel zum Auswählen der Standbilderfassungsbetriebsart aufweist.

8. Bilderfassungsvorrichtung gemäß Anspruch 1, wobei die optischen Verschlußmittel (16) einen mechanischen Lamellenverschluß und Mittel zum Bewirken des Öffnens und Schließens des Lamellenverschlusses aufweisen.

9. Verfahren zur Bilderfassung in einem Videostandbilderfassungsmodus, wobei das Verfahren folgende Schritte aufweist:
Vorsehen eines Festkörper-Bildsensors (10) vom Interline-Übertragungstyp, welcher folgendes aufweist: einen Photodetektor (1) zum Erzeugen einer Signalladung bzw. -charge ansprechend auf davon empfangenes Licht, welcher folgendes aufweist: Ladungsübertragungsmittel einschließlich eines lichtabgeschirmten Übertragungsgatterbereichs (6), welcher benachbart zu dem Photodetektor (1) ausgebildet ist, zum Auslesen der Signalladung in dem Photodetektor (1), und einen Übertragungsteil (2), der benachbart zu dem Übertragungsgatterbereich (6) ausgebildet ist, zum Übertragen der aus dem Photodetektor ausgelesenen Signalladung, gekennzeichnet durch die folgenden Schritte:
Vorsehen optischer Verschlußmittel (16) bezüglich des Festkörper-Bildsensors (10), so daß, wenn die optischen Verschlußmittel (16) offen sind, der Photodetektor (1) auftreffendem Licht ausgesetzt ist, und wenn die optischen Verschlußmittel (16) geschlossen sind, der Photodetektor (1) von auftreffendem Licht abgeschirmt ist, wobei die Verschlußmittel (16) eine Verschlußverzögerungszeit besitzen, die zwischen dem ersten Betätigen (bzw. Versorgen mit Energie) der Verschlußmittel (16) und dem Schließen der Verschlußmittel (16) gemessen wird;
Bewirken einer elektronischen Steuerung der Belichtungsperiode einschließlich der folgenden Schritte:
(a) elektronisches Leeren bzw. Löschen des Photodetektors (1), um die Belichtungsperiode einzuleiten und mit der Integration der Signalladung zu beginnen, und
(b) nachfolgende elektronische Aktivierung des Übertragungsgatterbereichs, um die Belichtungsperiode zu beenden und eine Ausleseperiode einzuleiten, in der die Signalladung von dem Photodetektor (1) zu dem Übertragungsgatterbereich (6) übertragen wird; und
Schließen der optischen Verschlußmittel (16), so daß die Verschlußmittel (16) zuerst vor der elektronischen Aktivierung des Übertragungsgatterbereichs (6) betätigt bzw. mit Energie versorgt werden und dann das Schließen gleichzeitig mit der elektronischen Aktivierung des Übertragungsgatterbereichs (6) erreichen, um ein Bilderfassungsausgabesignal gemäß der von dem Übertragungsgatterbereich (6) zu dem Übertragungsteil (2) übertragenen Bildladung zu erzeugen, wodurch das Bilderfassungsausgabesignal einen verbesserten Rauschabstand besitzt.

## Revendications

1. Appareil de saisie d'images électronique pouvant être mis en oeuvre en mode capture d'images vidéo fixes, comprenant :
un capteur d'images à semi-conducteur (10) du type à transfert interligne qui comporte un photodétecteur (1) pour produire une charge du signal en réponse à la lumière reçue sur celui-ci, un moyen de transfert de charge comprenant une région de grille de transfert (6) protégée de la lumière formée adjacente audit photodétecteur (1) pour extraire la charge du signal dans le photodétecteur (1) et une partie du transfert (2) formée adjacente à ladite région de grille de transfert (6) pour transférer la charge du signal extraite du photodétecteur (1), caractérisé par :
un moyen d'obturateur optique (16) disposé par rapport au capteur d'images à semi-conducteur (10) de sorte que lorsque le moyen d'obturateur optique (16) est ouvert, le photodétecteur (1) est exposé à la lumière incidente et lorsque le moyen d'obturateur optique (16) est fermé, le photodétecteur (1) est protégé de la lumière incidente, ledit moyen d'obturateur (16) ayant un temps de retard d'obturation mesuré entre la première alimentation de moyen d'obturateur (16) et la fermeture du moyen d'obturateur (16) ;
un moyen de contrôleur système (46) pour effectuer la commande électronique de la période d'exposition comprenant :
(a) un moyen pour effacer électroniquement le photodétecteur (1) afin d'initier la période d'exposition et de commencer l'intégration de la charge du signal, et
(b) un moyen pour activation électronique ultérieure de la région de grille de transfert (6) à la fin de la période d'exposition et pour initier une période d'extraction dans laquelle la charge du signal est transférée du photodétecteur (1) à la région de grille de transfert (6) ; et
un moyen pour effectuer la fermeture du moyen d'obturateur optique (16), de sorte que le moyen d'obturateur (16) est tout d'abord alimenté avant l'activation électronique de la région de grille de transfert (6) et obtient ainsi la fermeture de manière simultanée avec l'activation électronique de la région de grille de transfert (6) de façon à produire un signal de sortie de saisie d'images conformément à la charge du signal transféré de la région de grille de transfert (6) à la partie de transfert (2), d'où il résulte que le signal de sortie du signal d'image a un rapport signal/bruit amélioré.

2. Appareil de saisie d'images selon la revendication 1, dans lequel le photodétecteur (1) est formé comme une photodiode DTC.

3. Appareil de saisie d'images selon la revendication 1, dans lequel la partie de transfert (2) comprend un registre de transfert de charge vertical.

4. Appareil de saisie d'images selon la revendication 3, comprenant de plus un registre de transfert horizontal (4) et un moyen pour transférer le signal de saisie d'images du registre de transfert vertical au registre de transfert horizontal (4).

5. Appareil de saisie d'images selon la revendication 4, comprenant de plus un moyen pour recevoir le signal de saisie d'images du registre horizontal (4) et un moyen (30) pour enregistrer le signal reçu sur un support d'enregistrement de signal (32).

6. Appareil de saisie d'images selon la revendication 1, comprenant de plus un moyen d'arrêt de canal et un moyen de débordement de charge placé adjacent au photodétecteur (1).

7. Appareil de saisie d'images selon la revendication 1, comprenant de plus un moyen pour sélectionner le mode de fonctionnement du type saisie d'images fixes.

8. Appareil de saisie d'images selon la revendication 1, dans lequel le moyen d'obturateur optique (16) comprend un obturateur à lamelle mécanique et un moyen pour effectuer l'ouverture et la fermeture de l'obturateur à lamelle.

9. Procédé pour saisir une image en mode saisie d'images vidéo fixes, comprenant les étapes consistant à :
fournir un capteur d'images à semi-conducteur (10) du type à transfert interligne qui a un photodétecteur (1) pour produire une charge du signal en réponse à la lumière reçue sur celui-ci, un moyen de transfert de charge incluant une région de grille de transfert protégée de la lumière (6) formée adjacente audit photodétecteur (1) pour extraire la charge du signal dans le photodétecteur (1), et une partie de transfert (2) formée adjacente à ladite région de grille de transfert (6) pour transférer la charge du signal extraite du photodétecteur (1), caractérisé par les étapes suivantes consistant à :
positionner un moyen d'obturateur optique (16) par rapport au capteur d'images à semi-conducteur (10) de sorte que lorsque le moyen d'obturateur optique (16) est ouvert, le photodétecteur (1) est exposé à la lumière incidente et lorsque le moyen d'obturateur optique (16) est fermé, le photodétecteur (1) est protégé de la lumière incidente, ledit moyen d'obturateur (46) ayant un temps de retard d'obturation mesuré entre la première alimentation du moyen d'obturateur (16) et la fermeture du moyen d'obturateur (16) ;
effectuer la commande électronique d'une période d'exposition, comprenant les étapes consistant à :
(a) effacer électroniquement le photodétecteur (1) pour initier la période d'exposition et commencer l'intégration de la charge du signal, et
(b) activer électroniquement ultérieurement la région de grille de transfert à la fin de la période d'exposition et initier une période d'extraction dans laquelle la charge du signal est transférée du photodétecteur (1) à la région de grille de transfert (6) ; et
fermer le moyen d'obturateur optique (16) de sorte que le moyen d'obturateur (16) est tout d'abord alimenté avant l'activation électronique de la région de grille de transfert (6) et achève ensuite la fermeture de manière simultanée avec l'activation électronique de la région de grille de transfert (6), de façon à produire un signal de sortie de saisie d'images conformément à la charge de l'image transférée de la région de grille de transfert (6) à la partie de transfert (2), d'où il résulte que le signal de sortie de saisie d'images présente un rapport signal/bruit amélioré.
